# EUROPEAN PATENT APPLICATION

(11) **EP 2 674 693 A2**
(43) Date of publication of application: **18.12.2013**
(21) Application number: 13386019.7
(22) Date of filing: 27.05.2013
(51) Int. Cl.: F24J 3/08

(54) **Closed loop underground heat exchanger of high efficiency**

(30) Priority: 28.05.2012 GR 20120100282
(71) Applicant: Chaldezos, Ioannis, 34500 Aliveri (GR); Karytsas, Konstantinos, 11528 Athens (GR)
(72) Inventor: Chaldezos, Ioannis, 34500 Aliveri (GR); Karytsas, Konstantinos, 11528 Athens (GR)

(57) **Abstract**

A closed loop underground heat exchanger of high efficiency (13) which consists of a metallic mechanism (8) for heat extraction and/or rejection. It consists of at least a plastic pipe (6), at least one metallic block (7), at least one link (10) and at least one heat exchange metallic rod (9).

## Description

The invention refers to closed loop underground heat exchangers (or closed loop ground heat exchangers), which are used for the exploitation of the internal thermal energy of the medium with which they are in contact. The closed loop underground heat exchangers are installed widely in various geothermal applications.

The closed loop underground heat exchangers (or closed loop ground heat exchangers) are used, widely, in applications to provide heating and/or cooling and/or domestic hot water in all types of buildings, greenhouses and other applications. Applications of this type of heat exchangers exist in several countries around the world, such as United States of America, Italy, New Zealand, Russia, Greece, etc. The closed loop underground heat exchanger (or closed loop ground heat exchanger) can be defined as: all pipes which are positioned underneath the Earth's surface (i.e. in the subsurface) or are positioned in an aquatic environment (i.e., sea, lake, river, sewer (1) etc.), where inside this fresh water or water with antifreeze circulates, using either a circulation pump or natural flow.

The closed loop underground heat exchangers are used as "channels" of energy transfer from the subsurface to, at least, one heat pump during the heating period - winter (i.e. energy extraction process) and by the heat pump to the subsurface during the cooling period - summer (i.e. energy rejection process). The installation of the closed loop underground heat exchangers is mainly implemented with two geometrical patterns: horizontal and vertical, as well as several variations of these. Regarding the installation of closed loop underground heat exchangers having a vertical pattern borehole drillings is initially performed and then followed by the installation and their inclusion within the borehole "buries". On the other hand and regarding the installation of closed loop underground heat exchangers with a horizontal pattern for its burial full or partial trench digging is initially performed, and then is followed by the installation. Similar works are implemented during the installation of closed loop underground heat exchangers (of other geometrical patterns) which are variants of the two above geometrical patterns (vertical and horizontal). The pipes which constituted the closed loop underground heat exchanger can either be metallic or non-metallic.

The selection of piping material, of the geometric pattern and of other technical data is at the discretion of the designer and is achieved by detailed combination, mainly, of analytical data of subsurface or of the aquatic environment, of heating and/or cooling energy demand, of cost, of life time, as well as other possible partial parameters.

The selection of the metallic pipes is preferable, because this type of piping has higher thermal conductivity. It is noted that the major disadvantage of these pipes is the problem of corrosion, which occurs in those through time and therefore, usually, their use becomes restrained. Also, it is worth noting that the metallic piping, which are as a rule used, are manufactured of carbon steel or ductile iron.

On the other hand, the selection of non-metallic pipes (e.g. thermosetting resin, polybutylene or other polymeric materials) achieves good thermal conductivity (of course less than that of metallic pipes), and do not face corrosion problems. Also these pipelines have a lifespan of over 50 years.

It should be emphasized that both the closed loop underground heat exchanger with horizontal pattern (metallic or non-metallic) and the closed loop underground heat exchanger with vertical pattern (metallic or non-metallic) present advantages and disadvantages. The high cost of borehole drilling and/or trench digging, the irregular change in response of geological formations in deeper depths from region to region and the lack of required space environment around the building are mainly the barriers hindering the installation of a closed loop underground heat exchanger (vertical or horizontal). In the past there have been attempts to combine the advantages of both these geometric patterns. The result of these efforts is the closed loop underground heat exchanger with spiral pattern, which in several applications has been installed in the subsurface or has been "immersed" in the aquatic environment (river, lake, sea, etc.).

The present invention aims at creating a closed loop underground heat exchanger having a higher rate of exploitation of the internal thermal energy of the medium, reducing the cost, addressing the corrosion problems and minimizing the requirement of the surrounding area (m²) of the building (building, greenhouse and other applications).

With this invention the characteristics mentioned in the previous paragraph are achieved for any geometric pattern of closed loop underground heat exchanger (horizontal, vertical and/or variant thereof), due to the design and the placement of a metallic mechanism (8) in order to achieve better extraction and/or rejection from or to the subsurface or even to the aquatic environment.

According to the present invention, a closed loop underground heat exchanger presents many advantages. On the basis of the design and the placement of the metallic mechanism (8) and due to the high thermal conductivity of metals, the exploitation of the internal energy of the medium is optimal. Therefore, higher thermal extraction and/or rejection from or to the subsurface or even to aquatic environment is achieved by the placement of the particular metallic mechanism (8) which can be mounted to any closed loop underground heat exchanger. In conclusion, the placement of the particular metallic mechanism (8) in a closed loop heat exchanger, achieves equivalent heat extraction and/or rejection from or to subsurface or even in aquatic environment to a closed loop heat exchanger of the initial non-metallic pipe type, but with a shorter length and a smaller diameter. Having now, reduced the diameter and the length of the pipe of the closed loop underground heat exchanger, significant reduction is achieved in the manufacturing and the installation costs inclusive of any additional cost of the metallic mechanism (8). Furthermore, the life time of the closed loop underground heat exchanger is much higher compared to the metallic pipe and is not lagging behind when the extent of heat extraction and/or rejection is considered, because the use of non-metallic pipe (in the total length of these) is proposed. Also with the mount of metallic mechanism (8) the requirement for the available area (m²) around the building (building, greenhouse and other applications) is reduced substantially.

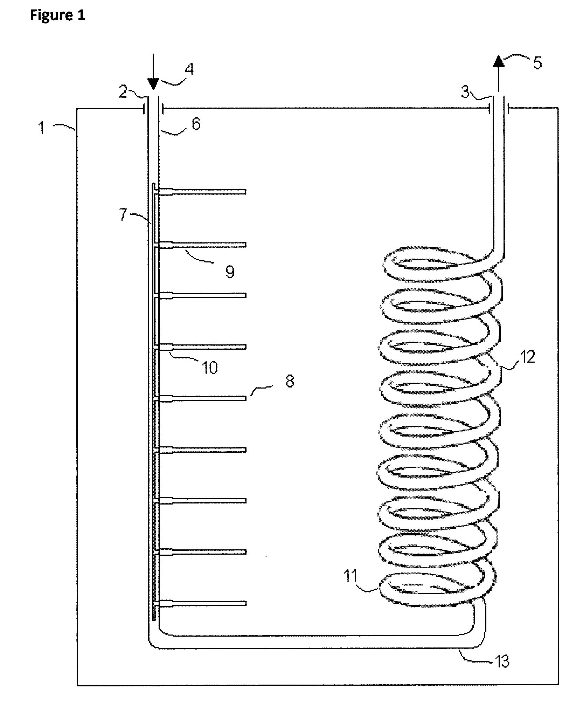

The particular invention is described below with the assistance of four examples referred to the attached figures (Figure 1, Figure 2, Figure 3 and Figure 4).

### Example 1

Figure 1 shows the intersection of an underground heat exchanger closed loop of high efficiency (13) in a spiral pattern, which may be "immersed" in a wastewater sewer (1) or in a tank or in a river or in a lake or in sea. This figure shows: the plastic pipe (6), the metallic mechanism (8), and the entire system.

As illustrated in Figure 1, the closed loop underground heat exchanger of high efficiency (13) in spiral pattern consists of plastic pipe (6) of finite dimensions (length, nominal diameter and internal diameter), which are calculated after energy calculations and on the basis of thermal energy and/or cooling demands towards conditioned (heating and cooling) building and/or greenhouse and/or other candidate application. Within the plastic pipe (6) can be circulate fresh water or water with antifreeze in physical or forced circulation. The plastic pipe (6) is filled with water or mixture of water with antifreeze and is "immersed" in the sewer (1) once and permanently. The sewer (1) is filled with waste water. The nozzle of the inlet (2) and the nozzle of the outlet (3) of plastic pipe (6) are defined as reference points respectively for the beginning and end of the closed loop underground heat exchanger of high efficiency (13). The beginning and the end of the plastic pipe (6) of the closed loop underground heat exchanger of high efficiency (13) operates respectively as inflow (4) and outflow (5) for the fluid medium which circulates therein. The metallic mechanism (8) has mounted to the plastic pipe (6). The metallic mechanism (8) comprises of a metallic block (7), the links (10) and the heat exchange metallic rods (9). The metallic block (7) of metallic mechanism (8) be positioned within the plastic pipe (6). The metallic block (7) is connected through links (10) with the heat exchange metallic rods (9) respectively.The heat exchange metallic rods (9) are directly in contact with the wastewater of the sewer (1). All links (10) besides for the their main role, namely connecting the metallic block (7) with the heat exchange metallic rods (9), have also a secondary role, that is to completely seal the fluid medium, which circulates inside the plastic pipe (6), from the wastewater of the sewer (1). Furthermore it should be noted that all links (10) consisting of thermal insulating material. Additionally, it should be mentioned that the coils (11) of the plastic pipe (6) constitute the plastic block (12) of the closed loop underground heat exchanger of high efficiency (13) in spiral pattern.

### Example 2

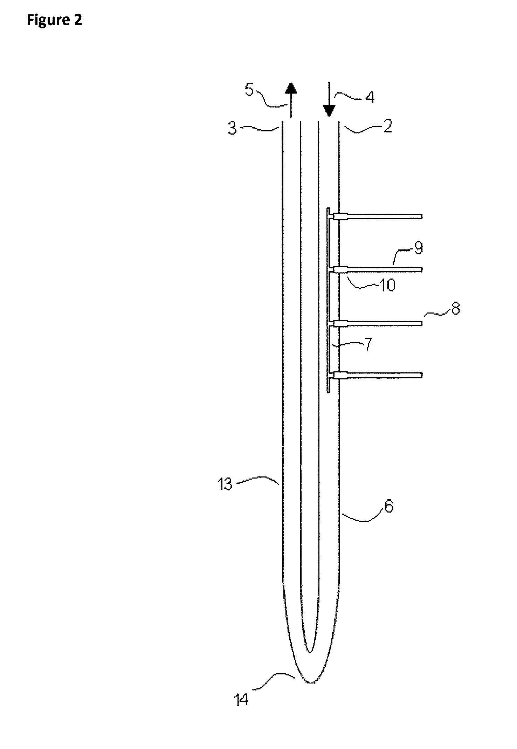

Figure 2 shows the intersection of an underground heat exchanger closed loop of high efficiency (13) in a vertical pattern, which may be "buried" in the subsurface. This figure shows: the plastic pipe (6), the metallic mechanism (8), and the entire system.

As illustrated in Figure 2, the closed loop underground heat exchanger of high efficiency (13) in vertical pattern consists of plastic pipe (6) of finite dimensions (length, nominal diameter and internal diameter), which are calculated after energy calculations and on the basis of thermal energy and/or cooling demands towards conditioned (heating and cooling) building and/or greenhouse and/or other candidate application. Within the plastic pipe (6) can be circulate fresh water or water with antifreeze in physical or forced circulation. The plastic pipe (6) is filled with water or mixture of water with antifreeze and is "buried" in the subsurface once and permanently. The nozzle of the inlet (2) and the nozzle of the outlet (3) of plastic pipe (6), which are placed in the Earth's surface, are defined as reference points respectively for the beginning and end of the closed loop underground heat exchanger of high efficiency (13). The beginning and the end of the plastic pipe (6) of the closed loop underground heat exchanger of high efficiency (13) operates respectively as inflow (4) and outflow (5) for the fluid medium which circulates therein. The metallic mechanism (8) has mounted to the plastic pipe (6). The metallic mechanism (8) comprises of a metallic block (7), the links (10) and the heat exchange metallic rods (9). The metallic block (7) of metallic mechanism (8) be positioned within the plastic pipe (6). The metallic block (7) is connected through links (10) with the heat exchange metallic rods (9) respectively. The heat exchange metallic rods (9) are directly in contact with the subsurface (geological formations). All links (10) besides for the their main role, namely connecting the metallic block (7) with the heat exchange metallic rods (9), have also a secondary role, that is to completely seal the fluid medium, which circulates inside the plastic pipe (6), from the subsurface (geological formations). Furthermore it should be noted that all links (10) consisting of thermal insulating material. Additionally, it should be mentioned that the U-loop (14) section of the plastic pipe (6) constitute the lowest section of the closed loop underground heat exchanger of high efficiency (13) in vertical pattern.

### Example 3

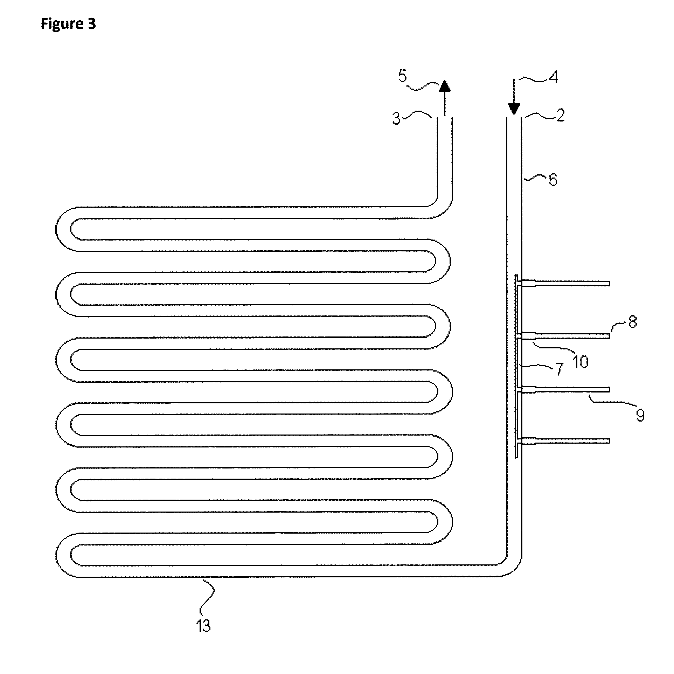

Figure 3 shows the intersection of an underground heat exchanger closed loop of high efficiency (13) in a horizontal pattern, which may be "buried" in the subsurface. This figure shows: the plastic pipe (6), the metallic mechanism (8), and the entire system.

As illustrated in Figure 3, the closed loop underground heat exchanger of high efficiency (13) in horizontal pattern consists of plastic pipe (6) of finite dimensions (length, nominal diameter and internal diameter), which are calculated after energy calculations and on the basis of thermal energy and/or cooling demands towards conditioned (heating and cooling) building and/or greenhouse and/or other candidate application. Within the plastic pipe (6) can be circulate fresh water or water with antifreeze in physical or forced circulation. The plastic pipe (6) is filled with water or mixture of water with antifreeze and is "buried" in the subsurface once and permanently. The nozzle of the inlet (2) and the nozzle of the outlet (3) of plastic pipe (6), which are placed in the subsurface, are defined as reference points respectively for the beginning and end of the closed loop underground heat exchanger of high efficiency (13). The beginning and the end of the plastic pipe (6) of the closed loop underground heat exchanger of high efficiency (13) operates respectively as inflow (4) and outflow (5) for the fluid medium which circulates therein. The metallic mechanism (8) has mounted to the plastic pipe (6). The metallic mechanism (8) comprises of a metallic block (7), the links (10) and the heat exchange metallic rods (9). The metallic block (7) of metallic mechanism (8) be positioned within the plastic pipe (6). The metallic block (7) is connected through links (10) with the heat exchange metallic rods (9) respectively. The heat exchange metallic rods (9) are directly in contact with the subsurface (geological formations). All links (10) besides for the their main role, namely connecting the metallic block (7) with the heat exchange metallic rods (9), have also a secondary role, that is to completely seal the fluid medium, which circulates inside the plastic pipe (6), from the subsurface (geological formations). Furthermore it should be noted that all links (10) consisting of thermal insulating material.

### Example 4

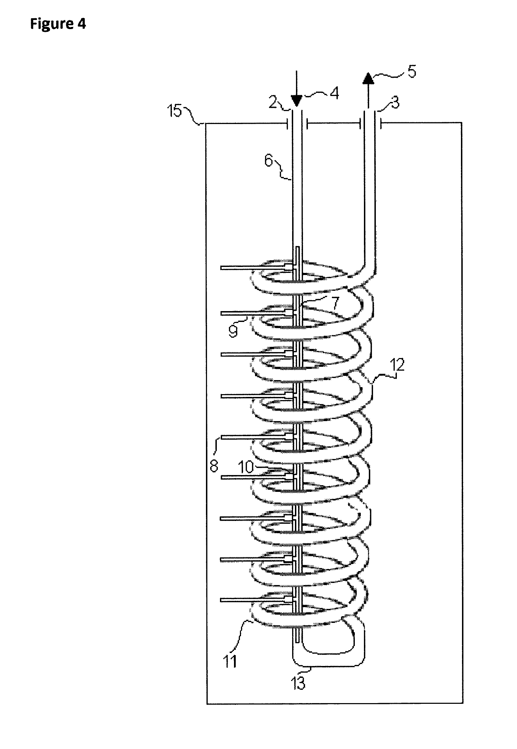

Figure 4 shows the intersection of an underground heat exchanger closed loop of high efficiency (13) in a spiral pattern, which may be "immersed" in a well (15) of the drainage system of a building (residence, hotel, and other application), which is filled with waste water. This figure shows: the plastic pipe (6), the metallic mechanism (8), and the entire system.

As illustrated in Figure 4, the closed loop underground heat exchanger of high efficiency (13) in spiral pattern consists of plastic pipe (6) of finite dimensions (length, nominal diameter and internal diameter), which are calculated after energy calculations and on the basis of thermal energy and/or cooling demands towards conditioned (heating and cooling) building and/or greenhouse and/or other candidate application. Within the plastic pipe (6) can be circulate fresh water or water with antifreeze in physical or forced circulation. The plastic pipe (6) is filled with water or mixture of water with antifreeze and is "immersed" in the well (15) once and permanently. The well (15) is filled with wastewater. The nozzle of the inlet (2) and the nozzle of the outlet (3) of plastic pipe (6) are defined as reference points respectively for the beginning and end of the closed loop underground heat exchanger of high efficiency (13). The beginning and the end of the plastic pipe (6) of the closed loop underground heat exchanger of high efficiency (13) operates respectively as inflow (4) and outflow (5) for the fluid medium which circulates therein. The metallic mechanism (8) has mounted to the plastic pipe (6). The metallic mechanism (8) comprises of a metallic block (7), the links (10) and the heat exchange metallic rods (9). The metallic block (7) of metallic mechanism (8) be positioned within the plastic pipe (6). The metallic block (7) is connected through links (10) with the heat exchange metallic rods (9) respectively. The heat exchange metallic rods (9) are directly in contact with the wastewater of the well (15). All links (10) besides for the their main role, namely connecting the metallic block (7) with the heat exchange metallic rods (9), have also a secondary role, that is to completely seal the fluid medium, which circulates inside the plastic pipe (6), from the wastewater of well (15). Furthermore it should be noted that all links (10) consisting of thermal insulating material. Additionally, it should be mentioned that the coils (11) of the plastic pipe (6) constitute the plastic block (12) of the closed loop underground heat exchanger of high efficiency (13) in spiral pattern.

## Claims

1. Closed loop underground heat exchanger of high efficiency (13) which comprises a metallic mechanism (8) for heat extraction and/or rejection.

2. The closed loop underground heat exchanger of high efficiency (13) according to the claim 1, which is **characterized by** having at least a plastic pipe (6), at least one metallic block (7), at least one link (10) and at least one heat exchange metallic rod (9).
